# EUROPEAN PATENT SPECIFICATION

(11) **EP 1 184 004 B1**
(45) Date of publication and mention of the grant of the patent: **05.04.2006**
(21) Application number: 01125311.9
(22) Date of filing: 11.12.1996
(51) Int. Cl.: A61C 3/02, A61C 5/02

(54) **Endodontic instrument**
Endodontie-Instrument
Instrument canalaire pour endodontie

(30) Priority: 11.12.1995 US 570642; 11.12.1995 US 570283
(43) Date of publication of application: 06.03.2002
(62) Divisional of application: 96944309.2
(73) Proprietor: ORMCO CORPORATION, Orange, CA 92667 (US)
(72) Inventor: McSpadden, John T., Lookout Mountain, Georgia 30750 (US)
(74) Representative: Vossius & Partner

(56) References cited:
- EP-A- 0 019 356
- DE-A- 3 429 277
- DE-C- 949 002
- FR-A- 2 537 430
- GB-A- 2 059 778

## Description

### Field of the Invention

The present invention relates generally to the field of endodontics and, more particularly, to instruments used in performing root canal procedures. The instruments are used to remove diseased tissue from the canal prior to sealing and filling the canal cavity with a suitable filler material, such as gutta-percha.

### Background

In the field of endodontics, one of the most important and delicate procedures is that of cleaning or extirpating a root canal to provide a properly dimensioned cavity while essentially maintaining the central axis of the canal. This step is important in order to enable complete filling of the canal without any voids and in a manner which prevents the entrapment of noxious tissue in the canal as the canal is being filled.

The root canals of a tooth are narrow passageways within the root structure of the tooth which contain the circulatory and neural systems of the tooth. These circulatory and neural systems enter the terminus of each root of the tooth and extend through a narrow, tapered canal system to a pulp chamber adjacent the crown portion of the tooth. If the pulp tissue becomes diseased, extraction of the tooth can often be avoided by removing the diseased tissue and sealing the canal system in its entirety.

In cleaning and enlarging the root canal, instruments called files or reamers are used. These are tapered instruments having flutes defining cutting edges which spiral along a working portion of the instrument. Whether the instrument is a file or a reamer is determmed by the pitch of the flutes. A greater pitch enables the instrument to cut better in a rotary mode, hence a reamer, and a lesser pitch enables the instrument to cut better in the reciprocating mode, hence a file. Many instruments are capable of operating both as a file and a reamer. During cleaning and shaping operations the file or reamer is normally rotated and/or reciprocated into and out of the root canal along the longitudinal axis of the instrument.

A widely used type of file or reamer is known by the designation "K-file" or "K-reamer". These instruments are made from a tapered rod which is typically triangular or square in cross-section. The instruments are fabricated by twisting the rod to form one or more generally helical flutes along the working portion of the rod. Other reamers or files are formed by grinding a tapered rod to form helical flutes along the working portion of the instrument. The flutes are typically substantially semi-circular in cross-section, that is, an arc tracing a path transverse to the flute length along the bottom of the flute wall is of substantially uniform radii at all points along the path.

Since root canals are not necessarily straight and are often curved or convoluted, it is often difficult to clean the canal white preserving its natural shape. Many conventional instruments have a tendency to want to straighten out the canal or proceed straight into the root canal wall, altering the natural shape of the canal and sometimes transporting completely through the canal wall at the point where greatest pressure is exerted against the wall of the canal.

Many conventional root canal files are also prone to breakage. For example, during the extirpating procedure, the dental chips which are formed may be inadequately removed from the root canal and may be forced into flutes along the instrument between the instrument and the root canal causing damage to the canal walls and/or inadequate or uneven tissue removal This build up of debris may also lead to increased friction resistance between the instrument and the canal, which in turn increases the torsional load on the instrument. In many cases, the torsional loads on the instrument exceed the tensile strength of the working portion of the instrument resulting in fracture.

Breakage can also occur as a result of the instrument screwing into the canal and becoming locked. Moreover, when modifications are made to conventional files and reamers to limit the tendency of the instrument to act as a screw or to diminish canal transportation, the tissue removal efficiency is generally sacrificed, particularly when a substantially non-circular canal is encountered as in a "fin" or "anastomosis".

### Summary of the Invention

GB-A-2 059 778 relates to a tooth passage clearance needle including a stem tapering for part of its length to a point and two dimetrically opposite continuous spiral recesses in the tapering portion forming spiral cutting edges. The spiral cutting edges extend away from the point and each recess is undercut immediately adjacent to the edge to form a positive cutting phase angle.

DE-C-949002 discloses an endodontic dental instrument comprising all the features of the preamble of Claim 1.

The present invention is defined by the features of the claims.

In accordance with one embodiment not part of the claimed invention an endodontic dental instrument is provided comprising a shaft, an elongate working portion along at least a portion of the length of the shaft, at least two helical flutes formed in the working portion of the shaft defining tissue removing edges at the periphery of the working portion of the shaft, the helical flutes being formed substantially unequal in shape, size and/or spacing about the periphery of said shaft when viewed in cross-section. The resulting structure urges the tissue removing edges into cutting engagement to a greater degree than the helical land portion of the file as the file is rotated in the canal. Thus, the tissue removing edges are forced to cut more equally on the inside and outside of canal curvatures than conventional symmetric instruments which have a tendency to cut primarily on the inside of the canal curvature due to the forces imposed on the canal wall by the instrument when it is in bending flexure.

In accordance with another preferred embodiment, the helical flutes further define helical lands adjacent each of the tissue removing edges. At least a portion of each land is recessed from the periphery of the shaft between adjacent flutes so as to provide an instrument having improved cutting ability, decreased frictional resistance and less liability to break.

In accordance with another preferred embodiment, the trailing edge distal from each tissue removing edge when viewed in cross-section recedes at from about an acute angle with respect to a line tangent to the periphery at the point of intersection, providing improved cutting ability and increased chip removal.

In accordance with another preferred embodiment, an instrument is provided having an elongate shaft having a drive end and a tip end with a working portion defined along at least a portion of the length of the shaft between the tip end and the drive end. The working portion includes a helical radial land and a helical blade edge with a first helical flute disposed between the land and the helical blade edge on one side of the blade edge and a second helical flute disposed between the helical blade edge and the land on the other side of the blade edge. The resulting structure urges the helical blade edge into cutting engagement to a greater degree than the helical land portion of the file as the file is rotated in the canal. Thus, the blade edge is forced to cut more equally on the inside and outside of canal curvatures than conventional instruments which have a tendency to cut primarily on the inside of the canal curvature due to the forces imposed on the canal wall by the instrument when it is in bending flexure.

These and other features and advantages will be readily apparent to those skilled in the art, having reference to the following detailed description and accompanying drawings, the invention not being limited to any one preferred embodiment.

### Brief Description of the Drawings

Figs. 1A-C are elevational, transverse cross section and longitudinal cross-section views, respectively, of one embodiment of an endodontic instrument which is not an embodiment of the invention, having a flute defining a single tissue removing edge and wherein the trailing edge distal from the tissue removing edge adjacent the periphery, in cross section recedes from the periphery at from about an acute angle with respect to a line tangent to the periphery;
Figs. 2A-C are elevational, transverse cross-section and longitudinal cross-section views, respectively, of another embodiment of an endodontic instrument similar to that of Figs. 1A-C, except having two flutes defining two corresponding tissue removing edges;
Figs. 3A-C are elevational, transverse cross-section and longitudinal cross-section views, respectively, of another embodiment of an endodontic instrument having two flutes defining a tissue removing edge therebetween and having a recessed land portion;
Figs. 4A-C are elevational, transverse cross-section and longitudinal cross-section views, respectively, of another embodiment of an endodontic instrument similar to that of Figs. 3A.C. except that the flutes are unequal in size and depth;
Figs. 5A-C are elevational, transverse cross-section and longitudinal cross-section views, respectively, of another embodiment of an endodontic instrument similar to that of Figs. 1A.C, except having a recessed land portion;
Figs. 6A-C are elevational transverse cross-section and longitudinal cross-section views, respectively, of another embodiment of an endodontic instrument similar to that of Figs. 2A-C, except having two recessed land portions adjacent each tissue removing edge;
Figs. 7A-C are elevational, transverse cross-section and longitudinal cross-section views, respectively, of another embodiment of an endodontic instrument having two helical flutes and two helical lands, one of which is recessed from the periphery;
Figs. 8A-C are elevational, transverse cross-section and longitudinal cross-section views, respectively, of another embodiment of an endodontic instrument similar to that of Figs. 7A-C, except wherein the trailing edge distal from each tissue removing edge adjacent the periphery, in cross-section, recedes from the periphery at from about an acute angle with respect to a line tangent to the periphery;
Figs. 9A-C are elevational transverse cross-section and longitudinal cross-section views, respectively, of another embodiment of an endodontic instrument similar to that of Figs. 7A-C, except wherein each land includes an outer portion and a recessed portion;
Figs. 10A-C are elevational, transverse cross-section and longitudinal cross section views, respectively, of another embodiment of an endodontic instrument which combines features illustrated by Figs. 1A-C with unequally spaced flutes and unequally sized lands as illustrated by Figs. 4A-C;
Figs. 11A-C are elevational, transverse cross-section and longitudinal cross-section views, respectively, of another embodiment of an endodontic instrument which combines several features of the invention;
Figs. 12A-C are elevational, transverse cross-section and longitudinal cross-section views, respectively, of another embodiment of an endodontic instrument having three unequally sized flutes defining unequally spaced tissue removing edges;
Figs. 13A-C are elevational, transverse cross-section and longitudinal cross-section views, respectively, of another embodiment of an endodontic instrument having unequally sized and shaped helical flutes and helical land portions;
Figs. 14A-C are elevational, transverse cross-section and longitudinal cross-section views, respectively, of another embodiment of an endodontic instrument having three unequally sized flutes defining unequally spaced tissue removing edges and land portions;
Figs. 15A-C are elevational, transverse cross-section and longitudinal cross-section views, respectively, of another embodiment of an endodontic instrument having two flutes defining a blade-like cutting edge and an opposed helical land;
Figs. 16A-C are elevational, transverse cross-section and longitudinal cross-section views, respectively, of another embodiment of an endodontic instrument having three flutes defining two blade-like cutting edges and a helical land;
Figs. 17A-C are elevational, transverse cross-section and longitudinal cross-section views, respectively, of another embodiment of an endodontic instrument similar to that of Figs. 15A-C, except having three flutes defining a blade-like cutting edge and two opposed helical lands;
Figs. 18A-C are elevational, transverse cross.section and longitudinal cross-section views, respectively, of another embodiment of an endodontic instrument having four flutes defining three blade-like cutting edges and a helical land; and
Figs. 19A-C are elevational, transverse cross-section and longitudinal cross-section views, respectively, of another embodiment of an endodontic instrument similar to that of Figs. 17A-C, except having four flutes defining a blade-like cutting edge and three helical lands.

### Detailed Description of the Preferred Embodiments

Figures 2-19 illustrate endodontic instruments having various working portion configurations within the scope of the invention. The instruments may be used as reamers or condensers depending on the direction of twist of the helical flutes and lands with respect to the direction of rotation of the instrument.

In all of the embodiments of the inventions illustrated herein, the instruments are represented as files or reamers. However, it will be appreciated that a mirror image of the instrument design may be used as a condenser for the same direction of rotation of the instrument. Condenser instruments made in accordance with the invention are used to fill void spaces in the root canal cavity.

With reference now to Figs. 1A-C, there is illustrated an endodontic instrument which may be used as a reamer and which has a shaft 10 having a base or proximate end 12 and an elongate working portion 14 extending between the base or proximate end 12 terminating in a tip or distal end 16. The proximate end 12 also contains a fitting portion 18 for mating with a chuck of a dental handpiece (not shown). Alternatively, or in addition to the fitting 18, the proximate end 12 may include a knurled or otherwise treated surface to facilitate hand manipulation of the reamer 10. The working portion 14 of the instrument has a length which may range from about 3 millimeters to about 18 millimeters and a peripheral diameter ranging from about 0.08 millimeters to about 1.9 millimeters. A preferred length is about 16 millimeters.

The working portion may have the same cross-sectional diameter between the proximate end 12 and the distal end 16 or the working portion may be tapered in either direction from the proximate end 12 to the distal end 16. When tapered, the taper of the cross-sectional diameter of the working portion 14 may range from about -0.01 to about 0.8 millimeters per millimeter, preferably from about 0.02 to about 0.06 millimeters per millimeter.

The working portion 14 comprises one or more helical flutes 20 and one or more helical lands 22 (one each in the embodiment in Figs. 1A-C). In the illustrated embodiment, the helical flute 20 and the helical land 22 are adjacent tissue removing edge 24. Helical land 22 and tissue removing edge 24 are at the periphery of the working portion 14 while flute 20 has a surface 26 (Figs. 1A, 1B) which is recessed from the periphery of the working portion 14 which surface, in cross-section, recedes from the periphery 28 at from about an acute angle 26 with respect to a line 29 tangent to the periphery at the point of intersection B which angle is measured from the side of the tangent line 29 distal from the removing edge 24.

As shown in Figs. 1A and 1B, tissue removing edge 24 is generally opposite a portion of the helical land 22. The wall of flute 20 intersects the periphery of the working portion in the region denoted by the letter A immediately adjacent to the periphery 28 of the working portion at an angle of about 90 degrees to tangent to form what is commonly refereed to as a zero or neutral rake angle from the perspective of the surface 26 of the flute 20. For purposes of this invention, the rake angle of the tissue removing edge 24 may be neutral, positive or negative but is preferably about neutral.

It will be appreciated that the helical land 22 presents a bearing surface between tissue removing edge 24 at point A and point B distal from the tissue removing edge (Fig. 1B) so that when rotated in a canal, only edge 24 removes tissue white the bearing surface of the helical land 22 bears against the canal wall. In Fig. 1B, both point A and point B are located at the periphery 28 of the working portion 14 on generally opposing sides of the land 22.

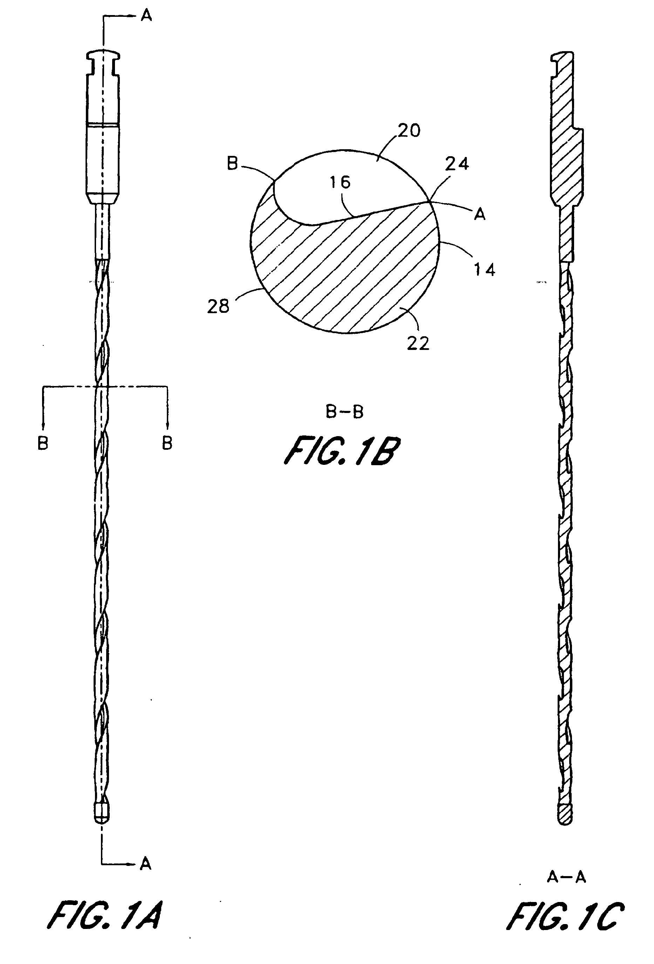

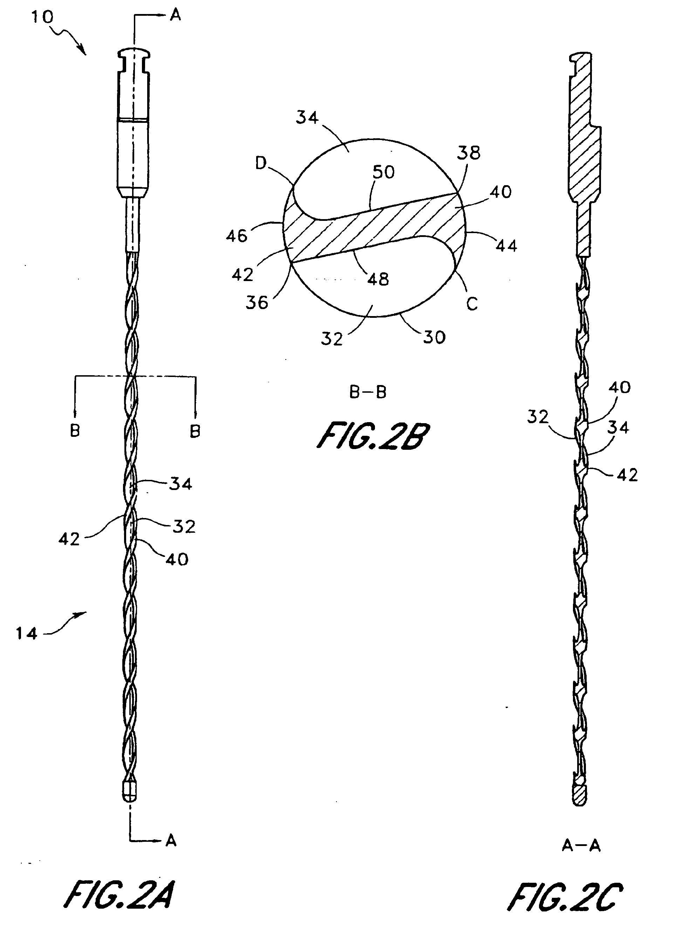

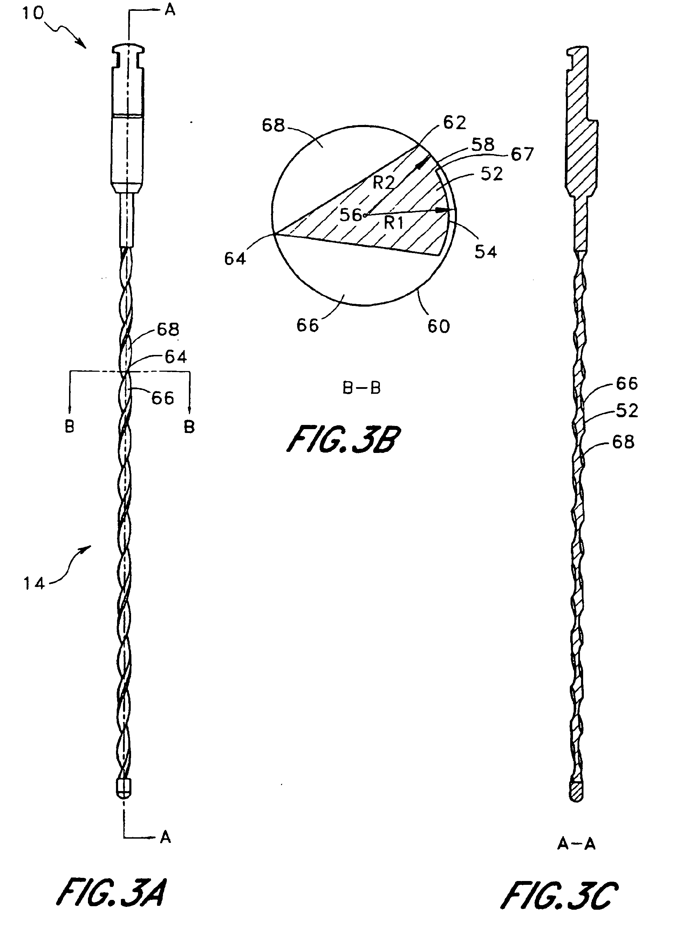

As illustrated by Figs. 1B and 1C, flute 20 has a concave surface 26 which is recessed from the periphery of the working portion, so that at point B, the surface 26 forms about an acute angle 27 with the line 29 tangent to the periphery. By providing a flute having about an acute angle at B, tissue and debris from the root canal may be more effectively transported and removed from the canal in a direction opposite to the direction of travel of the instrument as the instrument is rotated in the root canal By removing the debris more effectively from the root canal, there is less friction on the working portion and thus less tendency to shear the instrument by the torque applied to the instrument.

For the most effective cutting and tissue removal it is preferred that the pitch of the helical flutes 20 and helical lands 22 range between about 1 spiral per 16 millimeters to about 1 spiral per millimeter along the working portion 14 of the instrument.

An endodontic instrument 10 according to the first embodiment of the invention is illustrated in Figs. 2A-C wherein Fig. 2A is an elevational view, Fig. 2B is a cross-sectional view along line B-B of Fig. 2A and Fig. 2C is a partial longitudinal view of Fig. 2A taken along line A-A thereof. The working portion 14 of the instrument illustrated by Figs. 2A-C contains two helical lands 40 and 42 which have bearing surfaces 44 and 46. As with the instrument illustrated in Figs. 1A-C, points C and D distal from the tissue removing edges 36 and 38, respectively, form about acute angles with lines tangent to the periphery at the points of intersection as described above with reference to Fig. 1B.

The working portions of endodontic instruments according to the invention may be provided with various other friction reducing designs in lieu of or in addition to the above described designs illustrated in Figs. 1-2. Such designs may include flutes with receding surfaces as described above, one or more recessed land portions, three or more spaced apart helical lands wherein the spacing between adjacent helical lands in cross section varies, three or more spaced apart helical tissue removing edges, various cutting edge designs or a combination of two or more of the foregoing collection means. Cross-sectional configurations of endodontic instruments having alternative designs are discussed below.

In Figs. 3A-C and 4A-C. the working portion 14 of instrument 10 contains at least one outer helical land 58 adjacent the periphery defined by tissue removing edge 64 and edge 62 distal from the tissue removing edge 64 and at least one recessed land 54. As illustrated in Fig. 3B, helical land 52 has a receding wall portion 54 extending from a shoulder 57 to the flute 66 and which is a radial distance R, from the cross-sectional center 56 of the working portion and a portion 58 which is adjacent the periphery 60 of the working portion which is at a radial distance R₂ from the cross-sectional center 56. The periphery 60 is defined by helical tissue removing edges 64 and land portion 58. In this embodiment, helical flutes 66 and 68 are equally spaced apart about helical land 52 and tissue removing edge 64.

In Fig. 4A-C, there is again a helical land 70 having at least one outer portion 76 and at least one recessed portion 72. The recessed portion 72 which is at a radial distance R₁ from the cross-sectional center 74 of the working portion and a portion 76 of land 70 is adjacent the periphery 78 of the working portion at a radial distance R₂ from the cross sectional center 74. The periphery 78 is defined by helical tissue removing edge 82 and point 80 distal from tissue removing edge 80. In this embodiment, the curvilinear distance between tissue removing edge 82 and point 80 of helical land 70 is greater than the curvilinear distance between tissue removing edge 82 and point 88 of the helical land 70.

In the embodiments illustrated in Figs. 3A-C and 4A-C, there is a reduction of the force of tissue removing edges 64 and 82 against the wall of the root canal in the direction perpendicular to the direction of rotation of the instrument in the canal because of the recessed portions 54 and 72 of helical lands 52 and 70. A reduction in force of the tissue removing edges 64 and 82 with respect to the canal wall provides a reduction in friction during rotation of the instrument in the root canal as the instrument bends to conform to contours of the root canal cavity. The recessed wall portions of the helical lands have a radius R, which is from about 4 to about 30 percent less than radius R₂.

In addition to the recessed wall portions illustrated in Figs. 3A-C, the instrument illustrated in Figs. 4A-C also contains tissue removing edge 82 which is a greater curvilinear distance from 80 than from point 88 on helical land 70. The unequal curvilinear distances provide unequal cutting forces along the periphery 78 of the working portion of the instrument thereby producing a side-cutting effect which more readily maintains the central axis of a curved root canal.

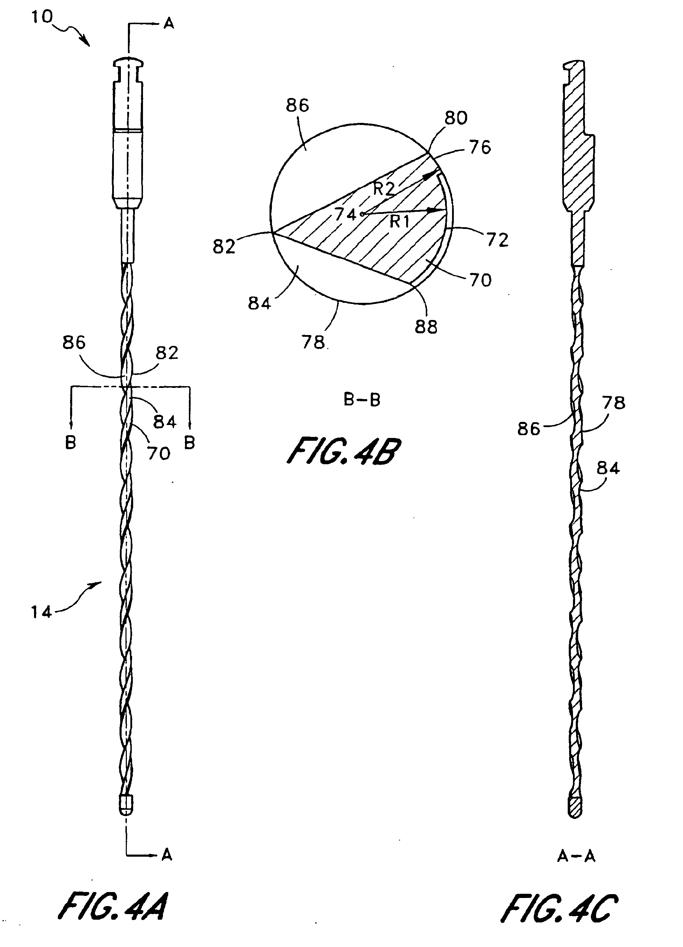

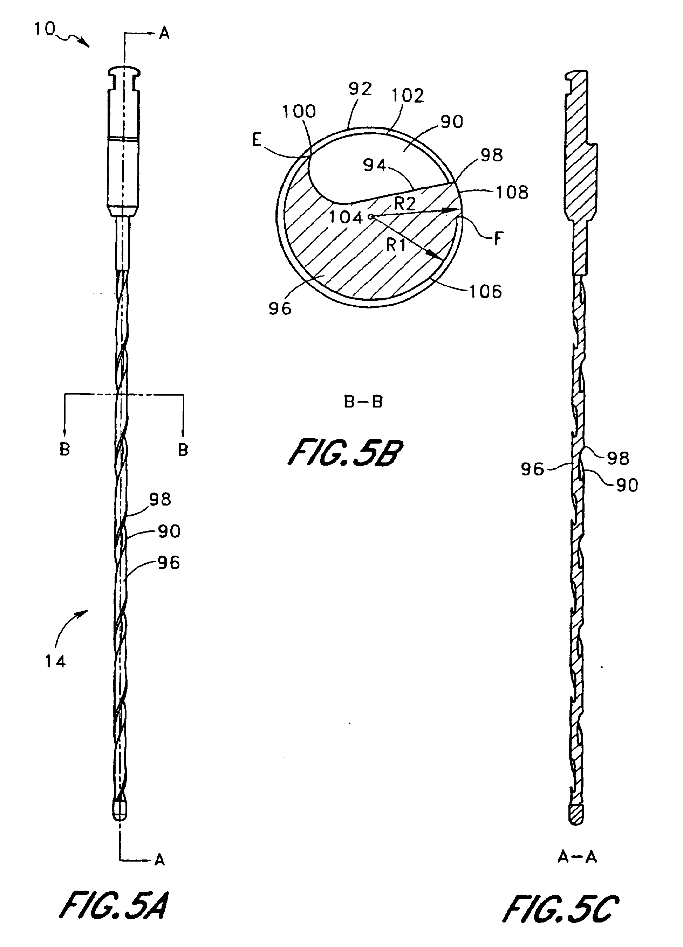

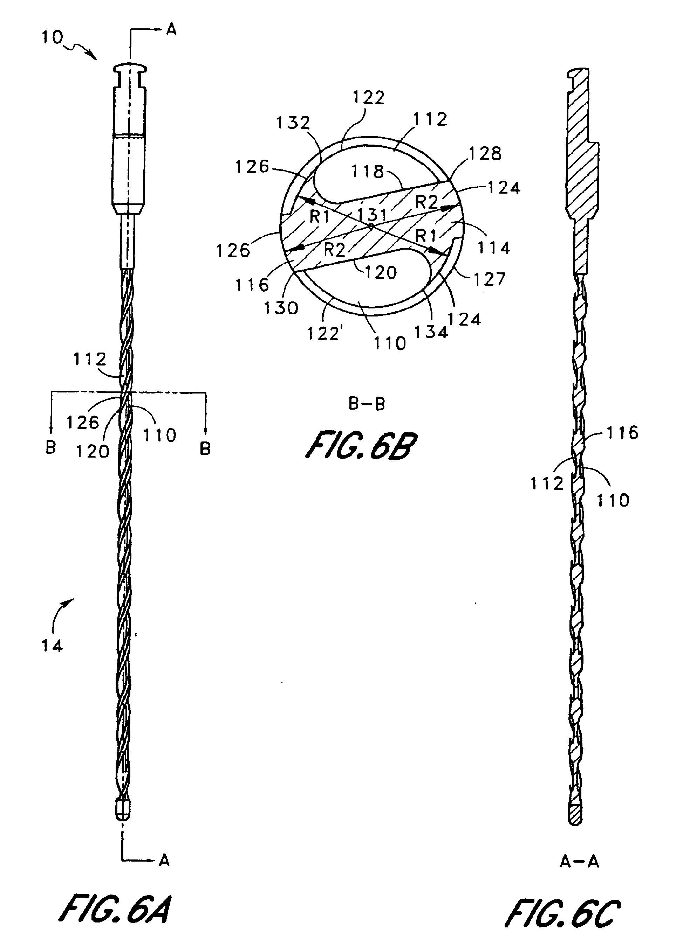

Figs. 5A-C and 6A-C are alternative embodiments of the invention containing two or more helical flutes which have flute surfaces, in cross-section which recede from the periphery at from about an acute angle with respect to a line tangent to an inside periphery 102 at the point of intersection and one or more helical lands having recessed wall portions. The inside periphery 102 is defined by point E and recessed land portion 106. In Figs. 5A-C, there is one helical flute 90 having a tissue removing edge 98 which intersects an outer periphery 92 of the working portion at an angle of about 90 degrees to tangent to form a zero or neutral rake angle from the perspective of the surface 94 of the flute 90.

Helical land 96 provides a bearing surface 106 between point E and tissue removing edge 98 so that when rotated in a canal, only edge 98 removes tissue while the bearing surface 106 bears against the canal wall Helical land 96 has an outer land portion 108 adjacent the periphery 92 and a recessed land portion 106 between shoulder F and point E. Recessed land portion 106 has a cross-sectional radius R, from the cross-sectional center 104 of the working portion and outer land portion 108 has a radius of R₂ from the cross-sectional center 104 which is from about 4 to about 30 percent greater than radius R₁.

As illustrated by Fig. 5B, the surface 94 of flute 90 which, in cross-section, recedes from the inner periphery 102 at from about an acute angle with respect to a line tangent to the periphery 102 at the point of intersection as illustrated by Fig. 1B above. Flute 90 provides means for collecting and removing tissue or debris from the root canal by transporting the debris opposite to the direction of travel of the instrument as the instrument is rotated in the root canal. In combination with recessed wall portion 106 of helical land 96. the instrument 10 illustrated in Figs. 5A-C provides reduced friction as the instrument is rotated in the canal due to uneven cutting forces and more effective tissue removal during endodontic procedures.

In Figs. 6A-C, the endodontic instrument contains two helical flutes 110 and 112 and two helical lands 114 and 116. Helical flutes 110 and 112, as illustrated in Fig. 6B, have surfaces 118 and 120 which recede from the inner peripheries 122 and 122' with about acute angles with respect to lines tangent to the peripheries 122 and 122' at the points of intersection 132 and 134 thereof. Outer land portions 124 and 126 of helical lands 114 and 116 lie on the outer periphery 126 of the working portion of the instrument which is defined by tissue removing edges 128 and 130, while recessed wall portions 125 and 129 of helical lands 114 and 116 lie at a radial distance R, from the cross-sectional center 131 which is about 4 to about 30 percent less than radial distance R, from the center 131 to the periphery 127 of the working portion defined by tissue removing edges 128 and 130.

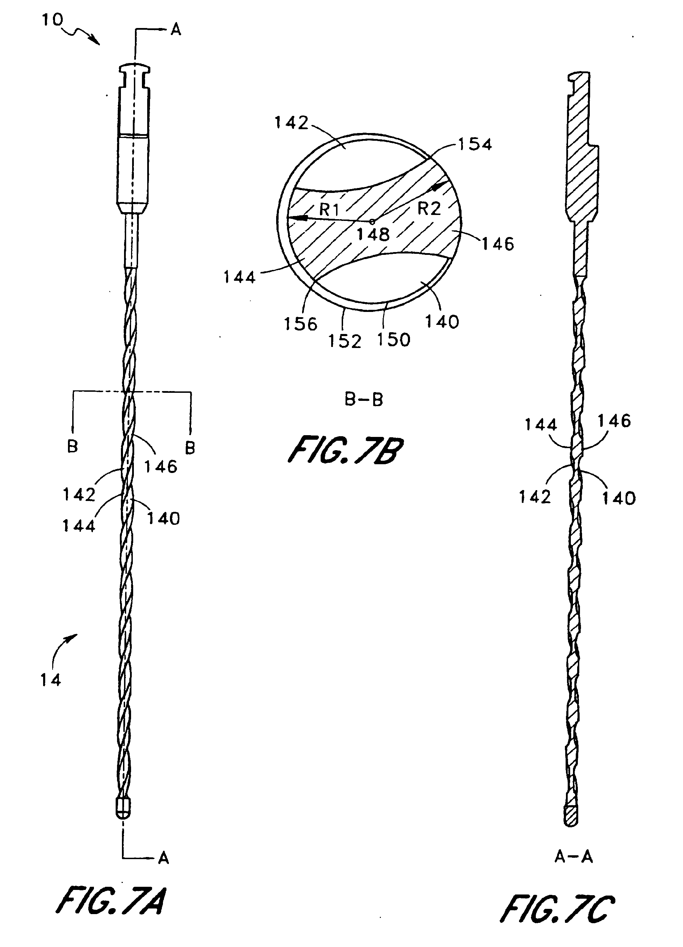

Figs. 7A-C illustrate another instrument 10 according to the invention having a working portion 14 containing two diametrically opposed helical flutes 140 and 142 and two diametrically opposed helical lands 144 and 146. In this embodiment, land 146 is an outer land which is adjacent the outer periphery 152 defined by tissue removing edge 154 and land 144 is a recessed land which is adjacent an inner periphery 150 defined by tissue removing edge 156 as illustrated by Fig. 78. Recessed land 144 has a radius R, from the cross-sectional center 148 to recessed land portion on inner periphery 150 and outer land 146 has a radius R₂ from the cross-sectional center 148 to outer periphery which is 4 to 30 percent greater than distance R₁. An instrument of the design illustrated in Figs. 7A-C will provide less aggressive tissues removing force with respect to the root canal wall on removing edge 154 as a result of the recessed land portion 146 than the force or removing edge 156. While helical flutes 140 and 142 are illustrated as being equally spaced with respect to removing edges 154 and 156 about the peripheries of the working portion, it will be recognized that unequal spacing of the flutes may also be used.

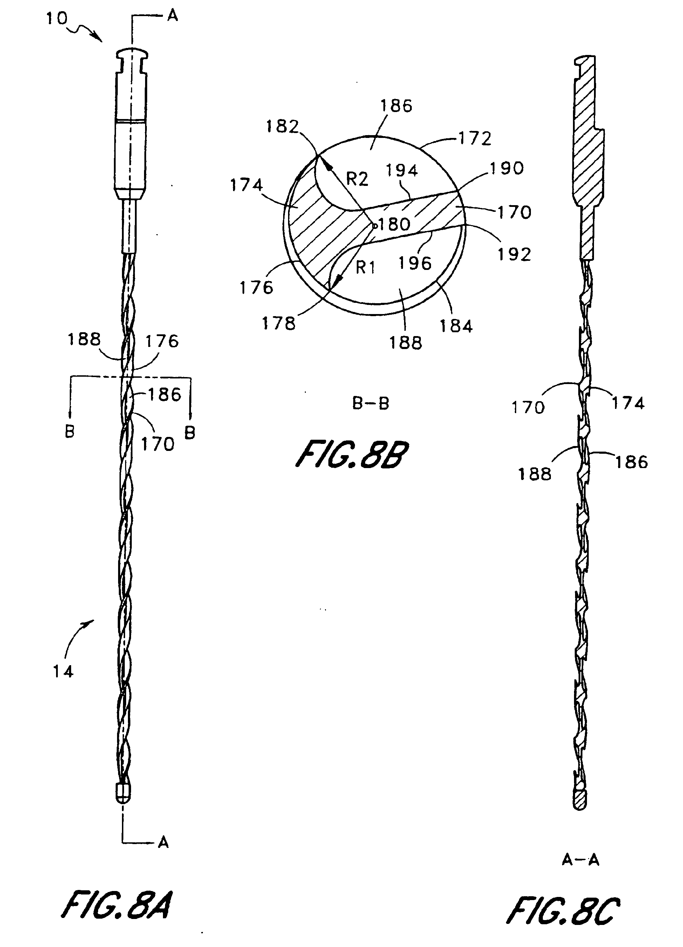

Figs. 8A-C represent an instrument 10 according to the invention having a helical land 170 which lies on the periphery 172 of the working portion defined by tissue removing edge 190 and a helical land 174 having a recessed wall portion 176 which has a radius R, at point 178 with respect to the cross-sectional center 180 and a wall portion having a radius R₂ which lines on the periphery 172. The radius of the wall portion of helical land 174 gradually increases from point 178 which ties adjacent the inner periphery 184 to point 182 which lies adjacent the outer periphery 172 so that helical land 174 has an outer land portion and a recessed land portion as illustrated in Fig. 8B. The recessed portion 176 of land 174 provides a reduction in the cutting force of cutting edge 190 and therefore reduces the friction with respect to the root canal walls during rotation of the instrument.

Spaced apart helical flutes 186 and 188 of the instrument illustrated in Figs. 8A-C each have surfaces 194 and 196, in cross section, which recede at about acute angles to lines tangent to the peripheries 172 and 184 at the points 182 and 178 respectively. Figs. 8A-C therefore represent an endodontic instrument 10 containing a combination of a recessed land and the helical flutes described in Figs. 1A-B which reduces friction and/or has better removal efficiency of material from the root canal during an endodontic procedure.

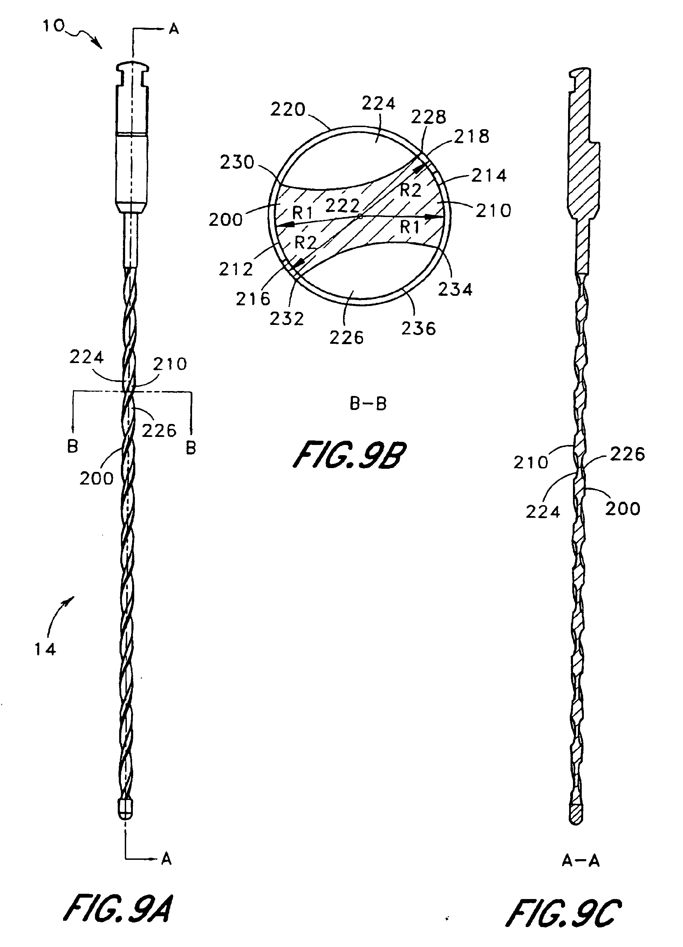

Figs. 9A-C provide a variation of the endodontic instrument of the invention which combines the features illustrated and described in Figs. 7A-C above with recessed land portions. In Fig. 9B, there are two opposing helical lands 200 and 210 separated by helical flutes 224 and 226. Helical land 200 has a recessed wall portion 212 and an out wall portion 216 and helical land 210 has a recessed wall portion 214 and an outer wall portion 218. The recessed wall portions 212 and 214 lie on an inner periphery 236 defined by points 230 and 234 which are distal to tissue removing edges 228 and 232. The recessed portions 212 and 214 are at a radial distance of R, in cross section from the cross-sectional center 222 of the working portion and outer land portions 216 and 218 lie at a radial distance R₂ from the center 222 and adjacent an outer periphery 220 of the working portion defined by tissue removing edges 228 and 232. Radius R₂ is at a distance which is 4 to 30 percent greater than R, with respect to the center 222. Helical flutes 224 and 226 are disposed about the periphery of the working portion so that the curvilinear distance between tissue removing edge 228 and point 230 is substantially the same as the curvilinear distance between tissue removing edge 232 and point 234. However, unequal curvilinear flute distances may also be used for increased cutting efficiency as described above with respect to Figs. 4A-C.

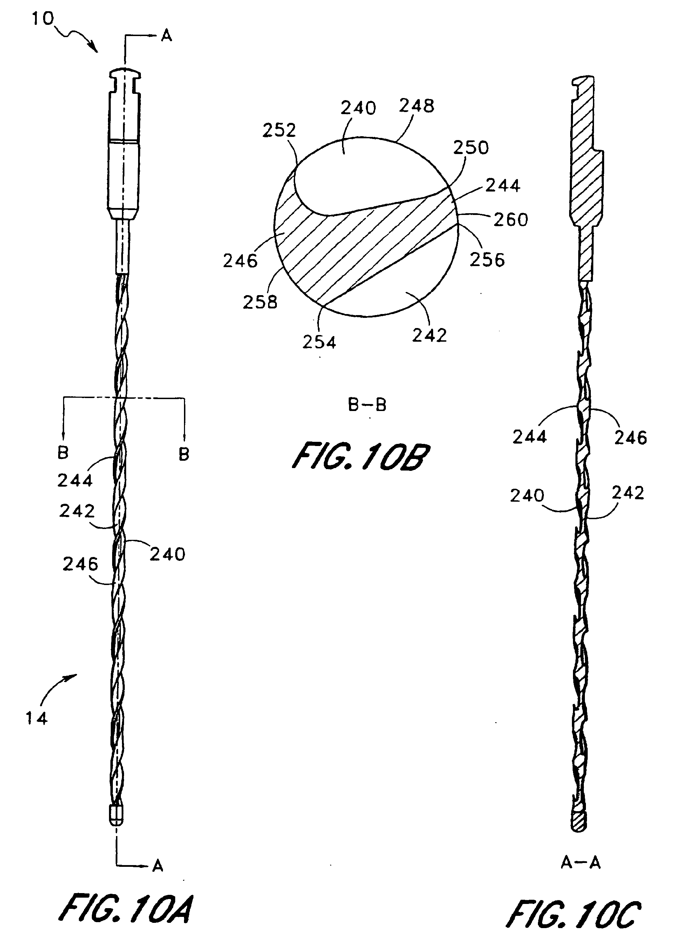

Figs. 10A illustrate a combination of the features illustrated by Figs. 1A.C with unequally spaced flutes 240 and 242 illustrated by Figs. 4A-C and unequally sized opposing lands 244 and 246. According to this embodiment, the working portion 14 contains at least one helical flute 240 wherein point 252 distal from tissue removing edge 250, in cross-section, recedes at about an acute angle with respect to a line tangent to the periphery 248 at the point of intersection as shown in Fig. 108 and described with reference to Figs. 1A-C above. As illustrated by Fig. 10B, the curvilinear distance from tissue removing edge 254 to point 252 is greater than the curvilinear distance from tissue removing edge 250 to point 256. Hence the bearing surface 258 of helical land 246 is substantially greater than the bearing surface 260 of helical land 244. The unequal bearing surface of the lands provide unequal tissue removal efficiencies along the periphery 248 of the working portion of the instrument thereby producing a side-cutting effect which more readily maintains the central axis of a curved root canal.

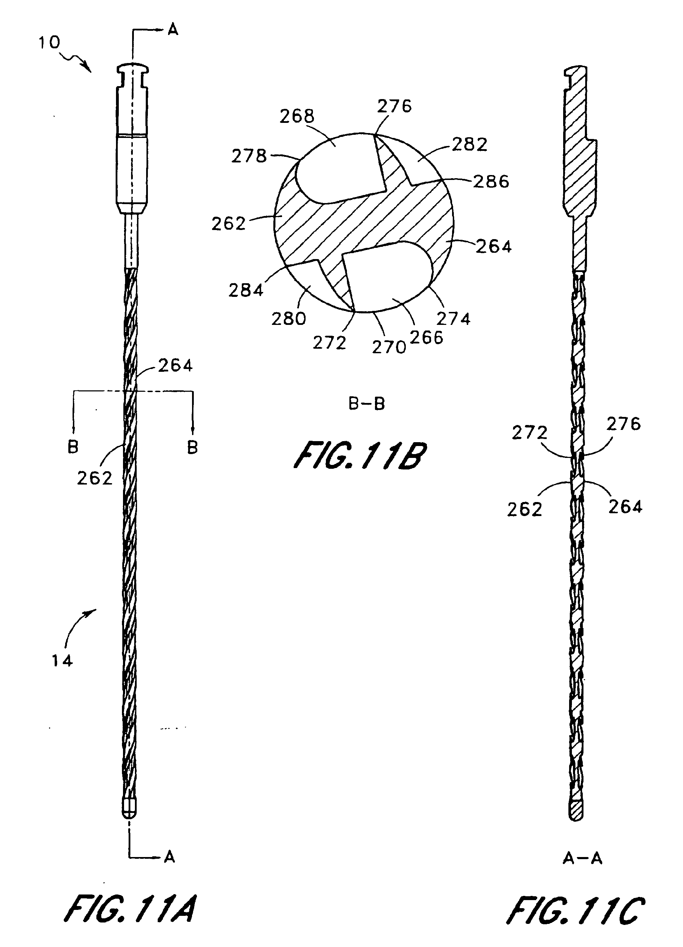

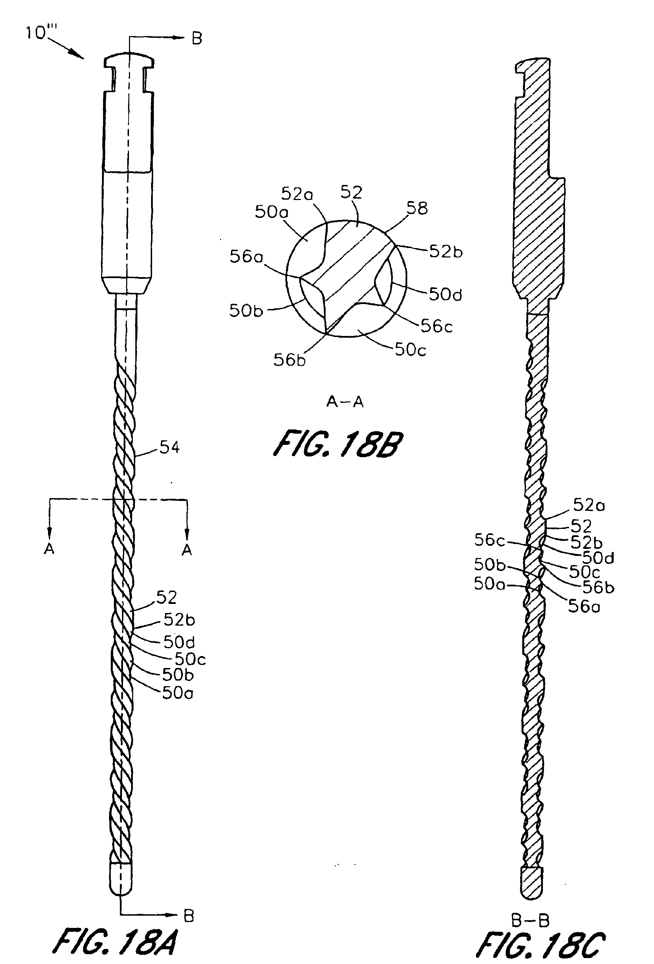

A combination of two of the before mentioned embodiments of the invention is illustrated in Figs. 11A-C. With reference to Fig. 11b, the endodontic instrument 10 contains two helical lands 262 and 264 and two helical flutes 266 and 268. Helical flute 266 is between tissue removing edge 272 and point 274 distal to removing edge 272 and helical flute 268 is between tissue removing edge 276 and point 278 distal to removing edge 276. Points 274 and 278 recede at from about acute angles with respect to line tangent to the periphery 270 at the points of intersection therewith as described by reference to Fig. 18 above. The curvilinear distances along the periphery 270 of the working portion from tissue removing edge 272 to point 274 may be substantially the same as the curvilinear distance from removing edge 276 to point 278 as illustrated, or the distances may be unequal.

In the illustrated embodiment of Figs. 11A-C, there are also provided two helical flutes 280 and 282 between tissue removing edges 284 and 272 and between tissue removing edges 286 and 276 which are substantially smaller in volume than flutes 266 and 268. Again, the curvilinear distance between tissue removing edge 272 and 284 may be substantially the same as the curvilinear distance between tissue removing edges 286 and 276 or the distances may be unequal.

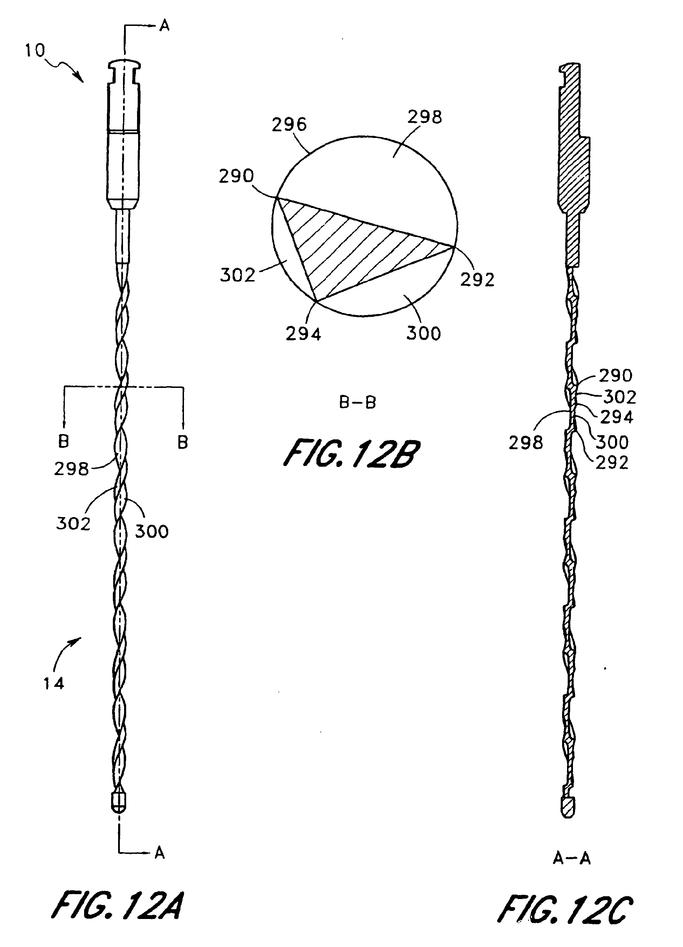

The endodontic instrument 10 illustrated in Figs. 12A-C contains three space apart tissue removing edges 290, 292 and 294 defining the working portion periphery 296. Helical flute 298 lies between tissue removing edges 290 and 292, helical flute 300 lies between tissue removing edges 294 and 292 and helical flute 302 lies between tissue removing edges 294 and 290 such that the curvilinear distance along the periphery 296 from removing edge 290 to removing edge 292 is greater than the curvilinear distance from removing edge 292 to removing edge 294 which in turn is greater than the curvilinear distance from the removing edge 294 to removing edge 290. In the alternative, the curvilinear distances between removing edges 292 and 294 and removing edges 294 and 290 may be substantially the same. In another alternative, flutes 298, 300 and 302 are all of substantially equal volume.

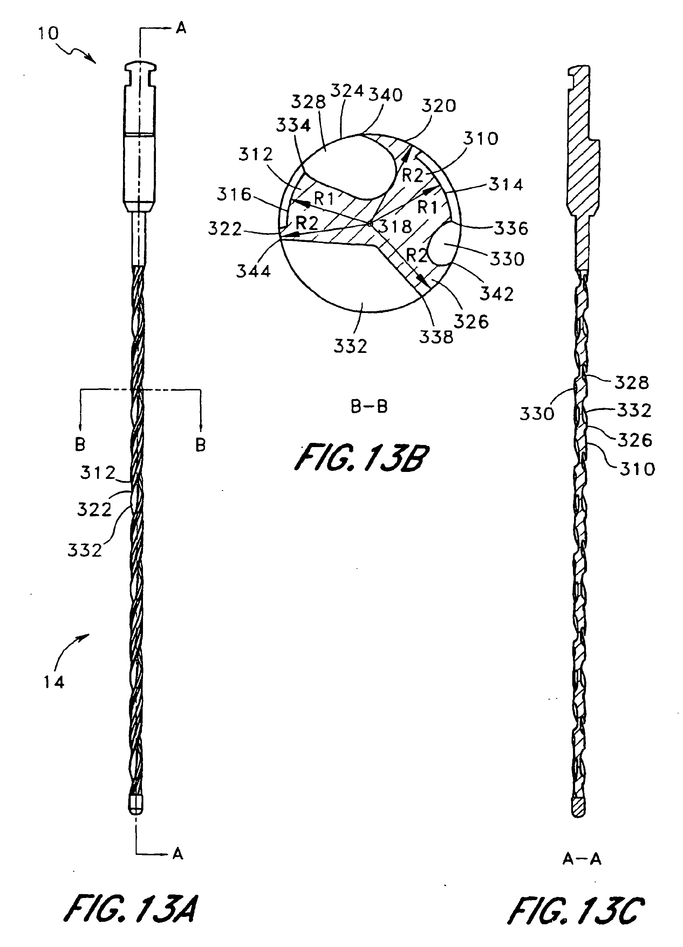

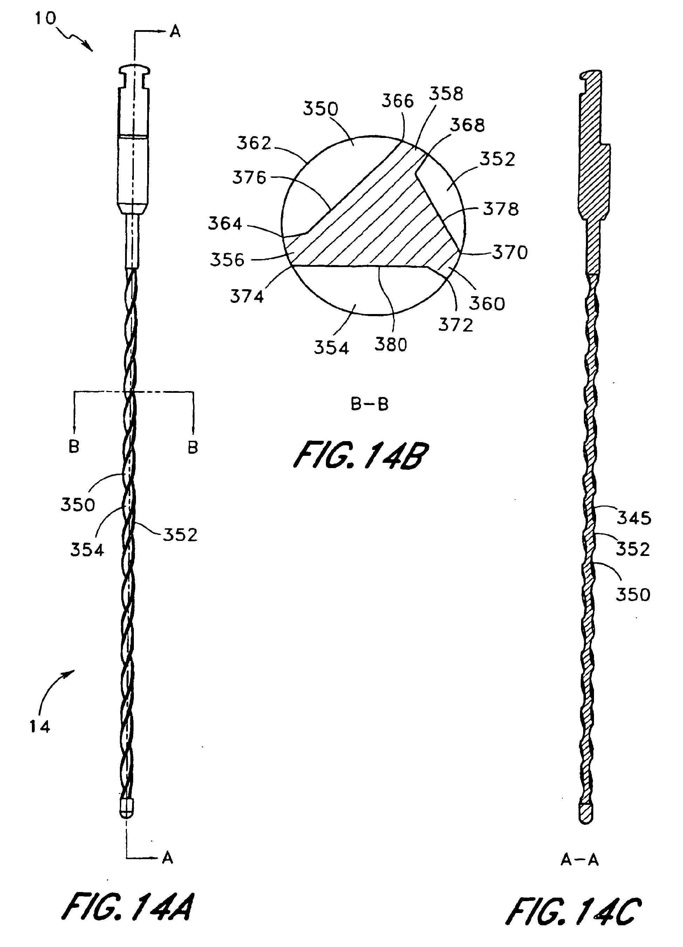

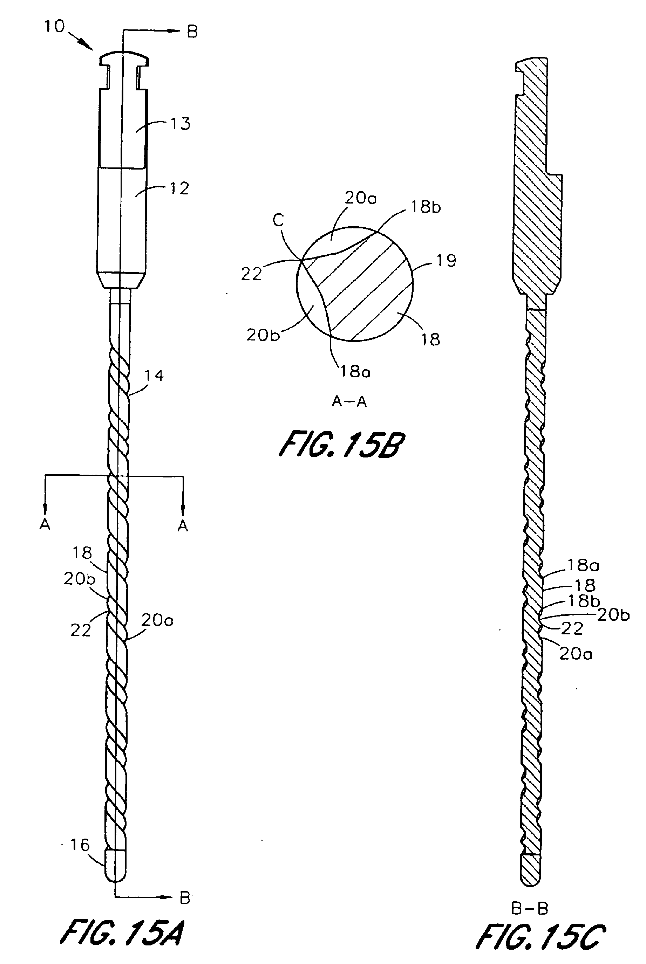

Figs. 13A-C represent yet another embodiment of an instrument 10 according to the invention which contains a combination of helical flute designs and one or more recessed helical land portions. In Figs. 13A-C, there are two helical lands 310 and 312 each having outer land portions 320 and 322 adjacent the periphery 324 defined by tissue removing edge 338 and recessed land portions 314 and 316 which lie at a radial distance R, from the cross-sectional center 318 of the working portion 14 as illustrated in Fig. 138. Helical land portions 320 and 322 and helical land 326 all lie adjacent the periphery 324 of the working portion at a distance R₂ from the cross-sectional center 318. In this embodiment, helical land 326 does not contain a recessed land portion, however all three lands 310, 312, and 326 may contained recessed land portions.

In the instrument illustrated by Fig. 13B, there are three helical flutes 328, 330, and 332. Helical flute 328 lies between tissue removing edge 334 and point 340 distal to removing edge 334, helical flute 330 lies between tissue removing edge 336 and point 342 distal to removing edge 336 and helical flute 332 lies between tissue removing edge 338 and point 344 distal to removing edge 338. As described above with reference to Fig. 1B, points 340 and 342 recede at from about an acute angle with respect to lines tangent to the periphery 324 at the point of intersection thereof. Furthermore, the curvilinear distance from tissue removing edge 338 to point 344 is greater than the curvilinear distance from tissue removing edge 334 to point 340 which in turn is greater than the curvilinear distance between tissue removing edge 336 and point 342. Accordingly, this embodiment combines the recessed land features with the flutes in Figs. 1A-C and the unequal spacing between adjacent flutes of Figs. 4A-C.

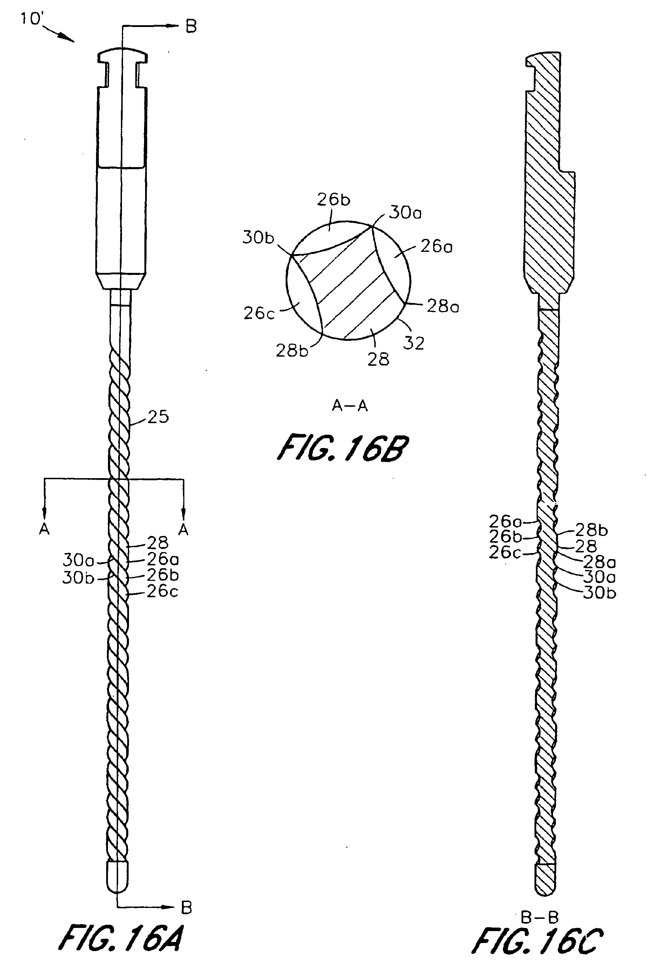

Figs. 14A-C provide another design of an endodontic instrument 10 of the invention. In this design, there are three helical flutes 350, 352 and 354 in the working portion 14 and three spaced apart helical lands 356, 358 and 360. The curvilinear distance along the periphery 362 of the working portion from the tissue removing edge 366 to point 364 distal to removing edge 366 is substantially greater than the curvilinear distance from tissue removing edge 370 to point 368 as shown in Fig. 14B. Likewise, the curvilinear distance along the periphery 362 from tissue removing edge 374 to point 372 is greater than the curvilinear distance from removing edge 370 to point 368 and may be the substantially the same, greater than or less than the curvilinear distance from tissue removing edge 366 to point 364. In this embodiment, the surfaces 376, 378 and 380 of flutes 350, 352 and 354 are angular rather than rounded when viewed in cross-section (Fig. 14B).

As described above with reference to Fig. 18, the points 364. 368 and 372 distal from removal edges 366, 370 and 374 respectively recede at about acute angles with respect to a line tangent to the periphery at the points of intersection therewith. Accordingly, the instrument illustrated by Figs. 14A-C provide tissue removal efficiencies along the periphery 362 of the working portion which are enhanced by producing a side cutting effect which more readily maintains the central axis of a curved root canal.

Figs. 15A-C provide another design of an endodontic instrument 10 of the invention. In this embodiment the working portion 14 is comprised of one or more blade-like helical cutting edges 22 and one or more helical radial lands 18 (one each in the embodiment of Figure 15A). In the illustrated embodiment, helical flutes 20a and 20b subtend blade edge 22 and land 18. That is, flute 20a is spaced about 90° from flute 20b so as to define helical radial land 18 opposite the blade edge 22 which lies between flutes 20a and 20b at the periphery of the working portion 14 so that the flutes 20a and 20b subtend each side of the land 18 and the edge 22.

As shown in Figure 158, blade edge 22 is generally opposite a bearing surface 19 of radial land 18. As used herein, the term "radial" in connection with the lands means that the bearing surface 19 of the land 28 is curvilinear as opposed to flat, when viewed in cross-section. The walls of flutes 20a and 20b intersect the periphery of the working portion 14 in regions denoted by the letters A, B and C, immediately adjacent the shank periphery at an angle of about 90° to tangent to form what is commonly referred to as a zero or neutral rake angle from the perspective of the surfaces of the flutes 20a and 20b. For purposes of this invention, the rake angle can be neutral, positive or negative, but is preferably about neutral.

It will be appreciated that radial land 18 presents bearing surface 19 between land flank edges 18a and 18b (Figures 15A,B) so that when rotated in a canal in a counterclockwise direction, only flank edge 18b cuts, while surface 19 bears against the canal wall Land flank edges 18a and 18b are located at the periphery of the working portion 14 on opposing sides of the bearing surface 19 of radial land 18. Blade edge 22 also ties at the periphery of the working portion between flutes 20a and 20b, and is about 180° from the bearing surface 19.

Figures 16A-C illustrate another embodiment of an endodontic dental instrument 10' according to the invention. In this embodiment, three flutes subtend a radial land and blade-like cutting edges in a working portion 25. As shown in Figure 16A, a first flute 26a and a third flute 26c are on opposite sides of helical radial land 28. Flutes 26a and 26b are on opposite sides of a blade edge 30a and flutes 26b and 26c are on opposite sides of a blade edge 30b. Flute 26b is generally opposite a bearing surface 32 of land 28.

The walls of flutes 26a, 26b and 26c intersect the periphery of the working portion 25 immediately adjacent the shank periphery at an angle of about 90°. Blade edges 30a and 30b are nominally about 90° apart.

Land flank edges 28a and 28b lie on the periphery of the working portion 25 on opposing sides of the bearing surface 32 of land 28. Helical blade-like cutting edges 30a and 30b and land flank edges 28a and 28b are therefore subtended by flutes 26a, 26b and 26c and lie at the periphery of the working portion 25. In counterclockwise rotation, only land flank edge 28a provides a cutting edge.

Thus, according to this embodiment, there are at least three helical flutes with a helical radial land between two of the flutes and blade-like cutting edges between two pairs of the flutes with the blade edges spaced apart about 90° and each spaced about 130° from an adjacent land flank edge, such that in cross-section, there is one land and three flutes, providing another embodiment of an asymmetrical working portion 25 according to the invention.

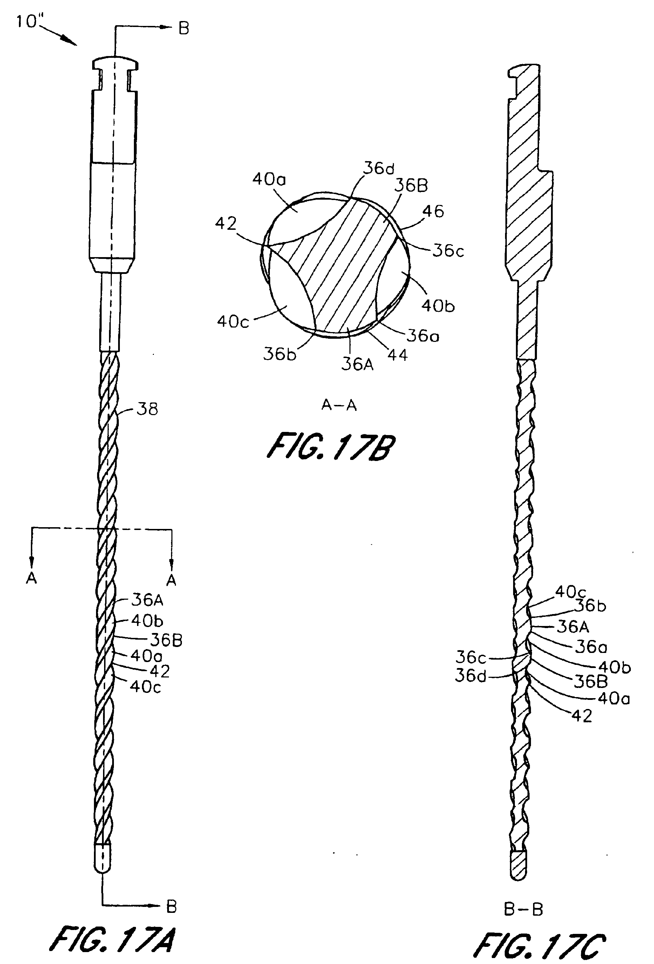

Yet another embodiment of an endodontic instrument 10" according to the invention is illustrated in Figures 17A-C. In this embodiment, two continuous helical radial lands 36A and 36B are formed in and along a working portion 38 of the dental instrument 10". As shown in Figure 17B, helical land 36A originates nominally about 120° from helical land 36B such that helical lands 36A and 36B are subtended by a helical flute 40b. There are two helical flutes 40a and 40c subtending each side of a blade-like cutting edge 42 and lands 36B and 36A, respectively.

Flutes 40c and 40b are on opposite sides of a bearing surface 44 of land 36A. Flutes 40b and 40a are on opposite sides of bearing surface 46 of land 36B. The walls of flutes 40a, 40b and 40c intersect the periphery of the working portion 38 immediately adjacent the shank periphery at an angle of about 90° to tangent of the shank periphery.

Figure 17C illustrates land flank edges 36a and 36b on the shoulders of land 36A and land flank edges 36c and 36d on the shoulders of land 36B. During clockwise rotation of the instrument, flank edges 36b and 36c provide cutting edges.

Blade edge 42 between helical flutes 40a and 40c is also illustrated. All of the edges 42. 36a, 36b, 36c and 36d are located on the periphery of the working portion 38. According to this embodiment, there are thus provided three helical flutes separated by two lands and blade-like cutting edge with the lands spaced apart nominally about 120° and the blade edge spaced about 120° from the lands between the lands, providing an asymmetrical working portion according to the invention.

Figures 18A-C illustrate still another endodontic instrument 10"' according to the invention. In this instrument, there are four helical flutes 50a, 50b, 50c and 50d and one helical land 52 between each set of four helical flutes formed in and along an asymmetrical working portion 54 of the dental instrument. The helical flutes subtend helical blade-like cutting edges 56a, 56b and 56c and land flank edges 52a and 52b of land 52. In counterclockwise rotation of the instrument, flank edge 52b is cutting edge.

Blade edge 56b is at the periphery of the working portion 51 and opposite helical radial land 52. In this embodiment, blade edges 56a and 56c do not extend to the periphery of the working portion, but terminate at a point which is spaced inwardly of the circumference of the periphery defined by bearing surface 58 and blade edge 56b.

The relationship of blade edges 56a, 56b and 56c is best seen in Figure 18B. Blade edge 56a is between flutes 50a and 50b, blade edge 56b is between flutes 50b and 50c and blade edge 56c is between flutes 50c and 50d. Flutes 50a and 50d each are on opposite sides of a bearing surface 58 and land 52. One side of the wall of each of flutes 50a, 50b, 50c and 50d intersects the periphery of the working portion 54 immediately adjacent the shank periphery at an angle of about 90° to tangent of the shank periphery. The other sides of the walls of flutes 50a, 50b, 50c and 50d terminate at blade edges 56a and 56c spaced inwardly of the circumference of the periphery of the working portion 54 as defined by bearing surface 58 and blade edge 56b.

Thus, according to this embodiment, the instrument includes four helical flutes with one helical radial land, two of the flutes merging to provide a blade-like cutting edge adjacent the periphery spaced about 180° from the land, and opposed pairs of intersecting flutes merging to provide blade-like cutting edges also about 180° apart from one another spaced inwardly of the periphery and shifted nominally about 90° relative to the land, the arrangement providing an asymmetrical working portion according the invention.

A further endodontic instrument 10"" according to the invention is illustrated in Figures 19A-C. In this instrument, three helical radial lands 60A, 60B and 60C and four helical flutes 62a, 62b, 62c and 62d are provided in and along the working portion 64. The helical flutes 62c and 62d subtend each side of blade-like cutting edge 66 and lands 60C and 60A, the edge 66 lying at the periphery of the working portion 64 and opposite helical land bearing surface 68 of helical land 60B. All of the helical lands and the blade edges in this embodiment extend to the periphery of the working portion 64.

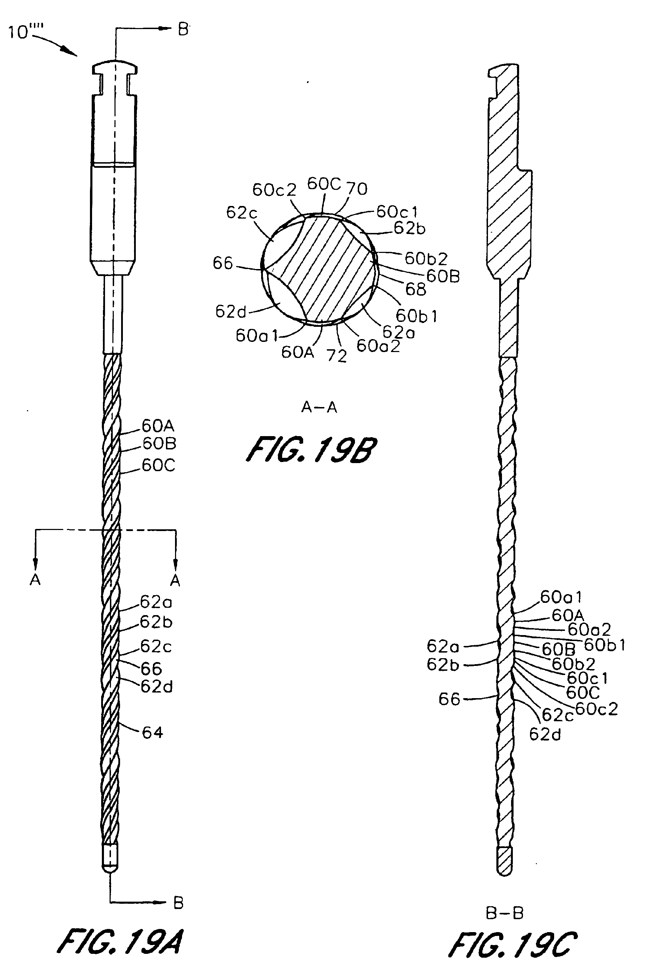

The relationship of blade-like cutting edge 66 and lands 60A, 60B and 60C is best seen in Figure 19B. As shown, blade edge 66 is between flutes 62c and 62d whereas bearing surface 68 of helical land 60B is between flutes 62a and 62b spaced from edge 66 about 180°. Bearing surface 70 of helical land 60C is between flutes 62d and 62a. The walls of flutes 62a, 62b and 62c directed toward lands 60A, 60B and 60C intersect the periphery of working portion 14 immediately adjacent the shank periphery at an angle substantially less than about 90° to tangent of the shank periphery. The walls of flutes 62c and 62d directed toward edge 66 intersect the shank periphery at an angle nominally of about 60°.

As shown in Figure 19C, flank edges 60a₁, 60a₂, 60b₂, 60c₁, 60c₂ are on the shoulders of lands 60A, 60B and 60C, respectively. All of these land flank edges are located on the periphery of the working portion 64. In counter clockwise rotation of the instrument, flank edges 60a₂, 60b₂, and 60c₂ provide cutting edges. According to this embodiment, there are three helical radial lands and a blade-like edge all spaced-apart nominally about 90° and four helical flutes separating the lands and the blade edge to provide a working portion according to the invention.

The various endodontic instruments described above, because of their particular design and geometry, provide reduced resistance during endodontic procedures and/or improved removal of material from the root canal of a tooth. The endodontic instruments of the invention are also believed to possess improved and more even cutting capability and an inherent propensity to work into canal areas that are non-circular so as to remove material from nooks previously untouched or insufficiently worked by conventional instruments, as well as to reduce the propensity for the instruments to break during endodontic treatment procedures.

To provide sufficient strength, the diameter of the web, or uncut core portion of the endodontic instruments preferably comprises approximately about 10 to about 80 percent of the cross-sectional diameter of the working portion. Web diameters greater than about 80 percent may make the instruments too rigid to bend around the curved portions of the root canal while core diameters of less than about 10 percent may not be rigid enough to provide effective cutting or compacting (for condensers) of material in the root canal.

As depicted in the foregoing illustrations the working portion extends a substantial distance along the length of the instrument and may possess a generally tapered configuration as a path is traced from the drive end of the working portion to the tip end. The diameter of the working portion may increase from about 0.01 to about 0.07 mm, preferably about 0.02 mm, for each millimeter up the working portion from the tip end to the drive end. The entire working portion of the shank may be about 20 to 30 mm, but longer or shorter working portions may be used. The diameter of the working portion adjacent the tip end may range from about 0.08 to about 1.9 millimeters.

The rake angles of the blade edges or tissue removing edges may be positive, negative, or neutral, but are preferably about neutral or slightly negative with respect to the periphery of the working portion. In order to make the instruments having the desired rake angles, the instruments may be ground from a straight or tapered rod, twisted and/or drawn to a taper with or without grinding.

The endodontic instruments of the invention are preferably made from surgical stainless steel, however, they can also be made from composite materials such as nickel, titanium or other exotic alloys, and the like. The preferred material for the instruments of the invention is nickel titanium or titanium 13-13. Those or ordinary skill will recognize that techniques for making conventional instruments may generally be applied to the manufacture of instruments according to the invention and with various known or later-developed materials. Suitable grinding techniques which may be used are described in metallurgical texts for grinding metals. For example, it is know that certain grinding wheels or bits for making instruments out of one material may not be effective for other or different materials. While a grinding surface made of course grit and rotating at a relatively high speed may be suitable for grinding stainless steel or a hard metal shaft, a nickel-titanium shaft may require a finer grit grinding surface rotating at a relatively slower speed in order to effectively abrade the shaft to form the necessary edges and lands.

The endodontic instruments of the invention may be used by manipulating the file manually in a rotating/reciprocating action, or the file or reamer may be manipulated by attaching the instrument to a motorized device for effecting the removal of material from the root canal.

## Claims

1. An endodontic dental instrument comprising a shaft (10), an elongate working portion (14) along at least a portion of the length of said shaft, at least two helical flutes (20) formed in the working portion of said shaft defining tissue removing edges at the periphery of said working portion of said shaft,
wherein said helical flutes (20) further define helical lands (22) adjacent each said tissue removing edges, wherein at least a portion of each said land is recessed from the periphery of said shaft between adjacent flutes and
**characterized in that** said recessed land portion has a radius from a cross-sectional center of the instrument to the recessed land portion which is about 4 to 30 percent less than a radius from the cross-sectional center of the instrument to the periphery of the working portion

2. The endodontic instrument of Claim 1 wherein the trading edge distal from each tissue removing edge when viewed in cross-section recedes at from about an acute angle with respect to a line tangent to the periphery at the point of intersection.

3. The endodontic instrument of Claim 1 wherein said tissue removing edges comprise blade edges formed between adjacent flutes.

4. The endodontic instrument of any of claims 1 to 3 for extirpating and enlarging a wall of a root canal wherein said shaft is elongate and has a drive end and a tip end with said working portion between the tip end and the drive end, the working portion including a helical radial land and a helical blade edge with a first helical flute disposed between said land and said helical blade edge on one side of said blade edge and a second helical flute disposed between said helical blade edge and said land on the other side of said blade edge.

5. The instrument of Claim 4 wherein the shah tapers from a point adjacent the drive end to a point adjacent the tip end.

6. The instrument of Claim 4 wherein the land defines a curvilinear bearing surface adapted to urge said blade edge into contact with the walls of the root canal being extirpated.

7. The instrument of Claim 4 further comprising a second helical blade edge spaced from said first blade edge by said second helical flute and a third helical flute disposed between said second helical blade edge and said radial and.

8. The instrument of Claim 4 wherein one of said helical flutes has a pitch different from that of the other helical flute so as to intersect both said helical land and said blade edge at successive spaced apart intersections to define a spaced apart series of segments of a generally helically arranged blade edge.

9. The instrument of Claim 4 wherein said first and second helical flutes are formed substantially unequal in shape, size and/or spacing about the periphery of said shaft when viewed in cross section.

## Patentansprüche

1. Endodontisches Dentalinstrument mit einem Schaft (10), einem langgestreckten Arbeitsabschnitt (14) mindestens entlang einem Abschnitt des Schaftes, mindestens zwei Spiralnuten (20), die im Arbeitsabschnitt des Schaftes ausgebildet sind und Gewebeabtragkanten am Umfang des Arbeitsabschnitts bilden, wobei die Spiralnuten (20) ferner spiralförmige Rücken (22) bilden, die an die Gewebeabtragkanten angrenzen, und wobei mindestens ein Abschnitt jedes Rückens zwischen benachbarten Nuten in bezug auf den Umfang des Schaftes ausgespart ist, **dadurch gekennzeichnet, daß** der ausgesparte Rücken einen Radius von einer Querschnittsmitte des Instruments zu dem ausgesparten Rücken hat, der etwa 4 bis 30 % kleiner ist als ein Radius von einer Querschnittsmitte des Instruments bis zum Umfang des Arbeitsabschnitts.

2. Endodontisches Instrument nach Anspruch 1, wobei die Hinterkante, die von jeder Gewebeabtragkante distal ist, im Querschnitt betrachtet, etwa von einem spitzen Winkel in bezug auf eine Tangente bis zum Umfang am Schnittpunkt zurücktritt.

3. Endodontisches Instrument nach Anspruch 1, wobei die Gewebeabtragkanten Schneidkanten aufweisen, die zwischen benachbarten Nuten ausgebildet sind.

4. Endodontisches Instrument nach einem der Ansprüche 1 bis 3, zum Extirpieren und Vergrößern einer Wand eines Wurzelkanals, wobei der Schaft langgestreckt ist und ein Antriebsende und ein Spitzenende mit dem Arbeitsabschnitt zwischen dem Spitzenende und dem Antriebsende hat, wobei der Arbeitsabschnitt einen spiralförmigen radialen Rücken und eine spiralförmige Schneidkante hat, wobei eine erste Spiralnut zwischen dem Rücken und der spiralförmigen Schneidkante auf einer Seite der Schneidkante angeordnet ist und eine zweite Spiralnut zwischen der spiralförmigen Schneidkante und dem Rücken auf der anderen Seite der Schneidkante angeordnet ist.

5. Instrument nach Anspruch 4, wobei der Schaft sich von einem Punkt angrenzend an das Antriebsende bis zu einem Punkt angrenzend an das Spitzenende verjüngt.

6. Instrument nach Anspruch 4, wobei der Rücken eine krummlinige Lauffläche bildet, die geeignet ist, die Schneidkante zwangsläufig mit den zu extirpierenden Wänden des Wurzelkanals in Kontakt zu bringen.

7. Instrument nach Anspruch 4, ferner mit einer zweiten spiralförmigen Schneidkante, die von der ersten Schneidkante durch die zweite Spiralnut beabstandet ist, und einer dritten Spiralnut, die zwischen der zweiten spiralförmigen Schneidkante und dem radialen Rücken angeordnet ist.

8. Instrument nach Anspruch 4, wobei eine der Spiralnuten eine Steigung hat, die sich von der der anderen Spiralnut unterscheidet, so daß sowohl der spiralförmige Rücken als auch die Schneidkante in aufeinanderfolgenden beabstandeten Schnittpunkten geschnitten werden, um eine beabstandete Serie von Segmenten einer im allgemeinen spiralförmig angeordneten Schneidkante zu bilden.

9. Instrument nach Anspruch 4, wobei die erste und zweite Spiralnuten in ihrer Form, Größe und/oder Beabstandung um den Umfang des Schafts, im Querschnitt betrachtet, im wesentlichen ungleich ausgebildet sind.

## Revendications

1. Instrument dentaire endodontique comprenant un arbre (10), une partie de travail allongée (14) le long au moins d'une partie de la longueur dudit arbre, au moins deux cannelures hélicoïdales (20) formées dans la partie de travail dudit arbre définissant des bords de retrait de tissu à la périphérie de ladite partie de travail dudit arbre, dans lequel lesdites cannelures hélicoïdales (20) définissent en outre des plages hélicoïdales (22) adjacentes à chacun desdits bords de retrait de tissu, dans lequel au moins une partie de chacune desdites plages est en retrait par rapport à la périphérie dudit arbre entre des cannelures adjacentes, et **caractérisé en ce que** ladite partie de plage en retrait possède un rayon depuis le centre en section transversale de l'instrument jusqu'à la partie de plage en retrait qui est inférieur d'environ 4 à 30 pour cent à un rayon depuis le centre en section transversale de l'instrument jusqu'à la périphérie de la partie de travail.

2. Instrument endodontique selon la revendication 1, dans lequel le bord arrière distal de chaque bord de retrait de tissu, lorsqu'il est observé en coupe transversale, est rétracté d'environ un angle aigu, par rapport à une ligne tangente à la périphérie au point l'intersection.

3. Instrument endodontique selon la revendication 1, dans lequel lesdits bords de retrait de tissu comprennent des bords de lames formés entre des cannelures adjacentes.

4. Instrument endodontique selon l'une quelconque des revendications 1 à 3, pour extirper et agrandir une paroi d'un canal de racine, dans lequel ledit arbre est allongé et comporte une extrémité d'entraînement et une extrémité de pointe avec ladite partie de travail entre l'extrémité de pointe et l'extrémité d'entraînement, la partie de travail comportant une plage radiale hélicoïdale et un bord de lame hélicoïdale avec une première cannelure hélicoïdale disposée entre ladite plage et ledit bord de lame hélicoïdale sûr une face dudit bord de lame et une deuxième cannelure hélicoïdale disposée entre ledit bord de lame hélicoïdale et ladite plage sur l'autre face dudit bord de lame.

5. Instrument selon la revendication 4, dans lequel l'arbre est effilé depuis un point adjacent à l'extrémité d'entraînement jusqu'à un point adjacent à l'extrémité de pointe.

6. Instrument selon la revendication 4, dans lequel la plage définit une surface d'appui curviligne adaptée pour pousser ledit bord de lame en contact avec les parois du canal de racine extirpées.

7. Instrument selon la revendication 4, comprenant en outre un second bord de lame hélicoïdale espacé dudit premier bord de lame par ladite deuxième cannelure hélicoïdale et une troisième cannelure hélicoïdale disposée entre ledit second bord de lame hélicoïdale et ladite plage radiale.

8. Instrument selon la revendication 4, dans lequel l'une desdites cannelures hélicoïdales a un pas différent de celui de l'autre cannelure hélicoïdale de façon à couper à la fois ladite plage hélicoïdale et ledit bord de lame sur des intersections successives espacées pour définir une série de segments espacés d'un bord de lame agencés généralement de façon hélicoïdale.

9. Instrument selon la revendication 4, dans lequel lesdites première et deuxième cannelures hélicoïdales sont formées sensiblement selon des formes, dimensions et/ou espacements inégaux autour de la périphérie dudit arbre, lorsqu'il est observé en section transversale.
